# EUROPÄISCHE PATENTSCHRIFT

(11) **EP 0 605 765 B1**
(45) Veröffentlichungstag und Bekanntmachung des Hinweises auf die Patenterteilung: **23.10.1996**
(21) Anmeldenummer: 93117815.6
(22) Anmeldetag: 03.11.1993
(51) Int. Cl.: B23B 41/00, B23Q 9/00, B23Q 1/25, B23Q 5/04

(54) **"Automatische Bohrmaschine"**
Automatic drilling machine
Machine automatique de forage

(30) Priorität: 29.12.1992 DE 4244407
(43) Veröffentlichungstag der Anmeldung: 13.07.1994
(73) Patentinhaber: Daimler-Benz Aerospace Airbus Gesellschaft mit beschränkter Haftung, 21129 Hamburg (DE)
(72) Erfinder: Belge, David N., D-20 255 Hamburg (DE); Grossheim, Kurt, D-22 455 Hamburg (DE)
(74) Vertreter: Hansmann, Dierk, Dipl.-Ing.

(56) Entgegenhaltungen:
- EP-A- 0 172 105
- FR-A- 1 578 697
- GB-A- 1 218 012
- US-A- 1 889 571

## Beschreibung

Die Erfindung bezieht sich auf eine automatische Bohrmaschine zum Herstellen von Nietbohrungen, wobei das Bohren in einem weitgehend automatisierten Verfahren abläuft. Aus der DE-PS-32 32 093 ist eine automatische Bohrmaschine mit den Merkmalen des Oberbegriffs des Anspruchs 1 bekannt.

Aus der DE-PS 32 32 093 ist eine automatische Nietmaschine bekannt, im wesentlichen bestehend aus einer Bohrvorschubeinheit, einer Nietzuführungseinheit und einer Vernietungseinheit, die jeweils steuerbar ausgeführt sind, wobei die besagten Einheiten an einer Haltekonsole in strahlenförmig zur Nietstelle hinweisenden Führungen verfahrbar gelagert sind und die Haltekonsole Pneumatikkupplungen, elektrische Stecker, sowie eine Spannvorrichtung zum Ankoppeln der Nietmaschine an einen Fertigungsroboter aufweist. Hiermit können beispielsweise Nietverbindungen an einem Flugzeugstruktur-Bauteil anhand eines entsprechenden Programms hergestellt werden. Dabei erfolgt das Bohren der Nietlöcher sowie das Einsetzen und Quetschen der Niete in einem automatischen Fertigungsablauf. Mittels dieser Nietmaschine sind jedoch Nietverbindungen an weniger gut zugänglichen Stellen des Bauteils nicht herstellbar, weil die auf der Haltekonsole montierten zum Nieten erforderlichen weiteren Einheiten ein Heranfahren des Bohrers an schwer zugängliche Nietstelle verhindern.

Demgemäß liegt der Erfindung die Aufgabe zugrunde, eine automatische Bohrmaschine für Nietbohrungen, wobei die Bohrmaschine gegenüber einer Haltekonsole zur Nietstelle hin verfahrbar ist und die Haltekonsole Spannelemente zum Andocken der Bohrmaschine an einen Fertigungsroboter sowie Kupplungen zur Energie- und Signalübertragung aufweist, so auszubilden, daß damit auch schwer zugängliche Nietstellen erreichbar sind.

Diese Aufgabe wird bei einer Bohrmaschine der vorgenannten Art dadurch gelöst, daß annähernd in der Mitte der Längserstreckung der Bohrspindel ein Antriebsrad und an jedem ihrer Enden eine Bohreraufnahme angeordnet ist und die Haltekonsole um eine Achse drehbar ist, die die Achse der Bohrspindel etwa in ihrer Mitte senkrecht schneidet.

Dabei ist insbesondere von Vorteil, daß mit dieser Bohrmaschine auch schwer zugängliche Nietstellen, beispielsweise auch über Kopf, erreichbar sind.

Vorteilhafte Weiterbildungen der Erfindung sind in den Unteransprüchen angegeben.

So besteht ein Vorteil der Bohrmaschine nach Anspruch 2 darin, daß damit Paßbohrungen herstellbar sind.

Ein Vorteil der Bohrmaschine nach den Ansprüchen 3 bis 7 besteht darin, daß die betreffenden Motoren sehr gut regelbar sind.

Ein Vorteil der Bohrmaschine nach Anspruch 8 besteht darin, daß dabei das Auffinden einer Bohrstelle mit sehr großer Genauigkeit möglich ist.

Ein Vorteil der Bohrmaschine nach den Ansprüchen 9 bis 11 besteht darin, daß dabei jede einzelne Operation auf einem Monitor überwachbar ist.

Ein Vorteil der Bohrmaschine nach Anspruch 12 besteht darin, daß eine unkotrollierte Abgabe von Netallspänen an die Umwelt vermieden wird.

Ein Vorteil der Bohrmaschine nach Anspruch 13 besteht schließlich darin, daß der Bohrer nicht überhitzt werden kann.

Ein Ausführungsbeispiel der Erfindung ist anhand der Zeichnung dargestellt und nachfolgend näher erläutert. Es zeigen
- Fig. 1: eine Ansicht der an einem Positionierer angedockten Bohrmaschine,
- Fig. 2: eine vergrößerte Darstellung der Bohrmaschine nach Fig. 1,
- Fig. 3: die Teilansicht III nach Fig. 1,
- Fig. 4: die Ansicht IV nach Fig. 1,
- Fig. 5: vergrößerte Einzelheiten nach Fig. 3,
- Fig. 6: den Schnitt VI-VI nach Fig. 5,
- Fig. 7: Einzelheiten einer Aufnahme für den Bohrer,
- Fig. 8: den Spindelträger mit Absaugleitungen und
- Fig. 9: eine Absaughaube mit einer Sprühdüse.

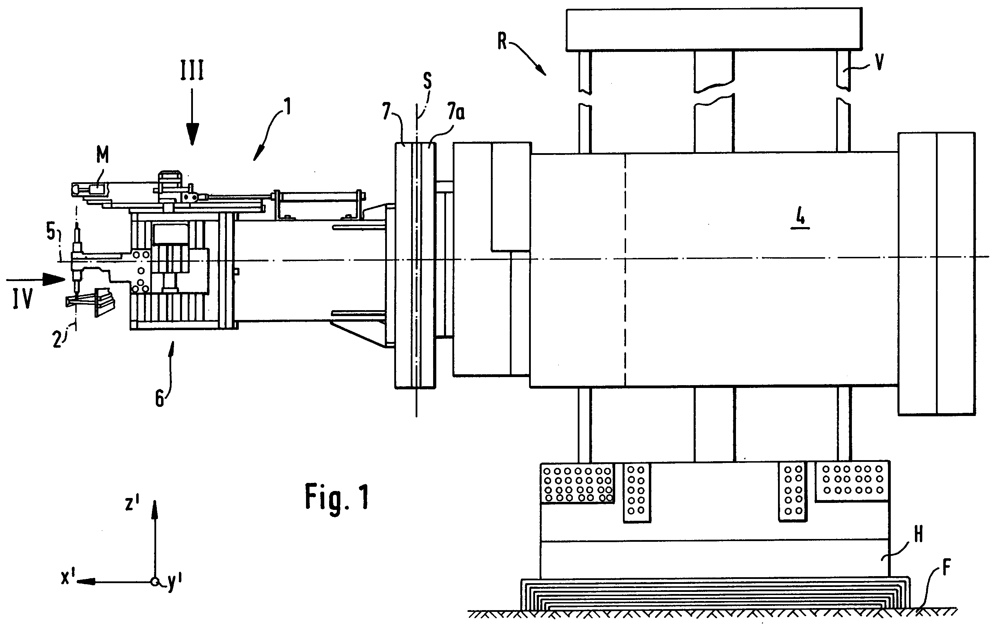

Figur 1 zeigt eine Bohrmaschine 1, die an einem programmsteuerbaren Roboter R mittels einer durch die Linie S angedeuteten Schnittstelle angedockt ist. Der Roboter R besteht im wesentlichen aus einer Horizontalführung H, einer Vertikalführung V und einem Positionierer 4, wodurch die Bohrmaschine 1 gegenüber einem Fundament F in den Richtungen x',y' und z' verfahrbar ist. Die mit 6 bezeichnete Bohreinheit, die praktisch alle mechanischen Bestandteile der Bohrmaschine 1 umfaßt, ist über eine Haltekonsole 3 mit einem Flansch 7 verbunden, der alle erforderlichen Kupplungen zur Energie- und Signalübertragung sowie zum mechanischen Andocken an den positioniererseitigen Flansch 7a enthält. Der Flansch 7a, und damit auch die Bohrmaschine 1, sind um eine Achse 5 schwenkbar. Zur Erfassung von Bauteilkoordinaten weist die Bohrmaschine 1 ferner eine Meßeinrichtung M auf.

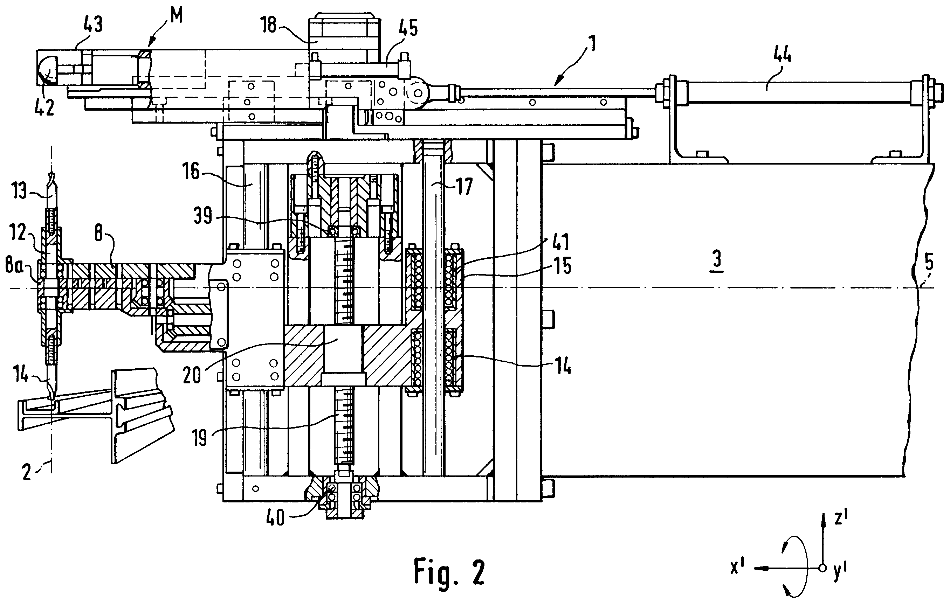

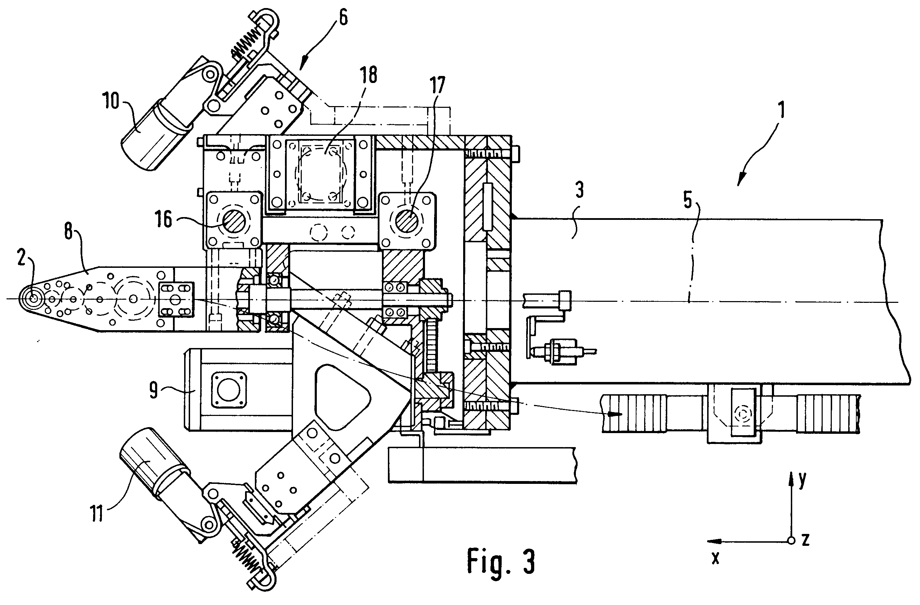

Die Figuren. 2 und 3 zeigen die Bohreinheit 6 in vergrößerter Darstellung nach Fig. 1 mit dem Spindelträger 8, dem Bohrmotor 9 und der innerhalb des Bohrkopfes 8a gelagerten Bohrspindel 12 mit den Bohrern 13 und 14. Diese sind von unterschiedlichem Durchmesser und stehen wahlweise zur Verfügung. Die Auswahl des jeweils gewünschten Bohrers kann gegebenenfalls durch eine entsprechende Drehung um die Achse 5 der Haltekonsole 3 um 180° erreicht werden. Wird die Bohrmaschine nur um 90° gedreht, so können damit horizontale Bohrungen hergestellt werden. Der Spindelträger 8 ist mit einem gegenüber der Haltekonsole 3 in Richtung der Achse der Bohrspindel 12 verfahrbaren Schlitten 15 fest verbunden, der seinerseits durch zwei mit der Konsole fest verbundene zylindrische Säulen 16 und 17 geführt ist. Seitens der Haltekonsole 3 ist ein elektrischer Vorschubmotor 18 angeordnet, der über eine Hubspindel 19 auf eine Spindelmutter 20 einwirkt, die ihrerseits mit dem Schlitten 15 starr verbunden ist. Alle im Hinblick auf ihre Funktion mit der Konsole 3 starr verbundenen Elemente werden im folgenden konsolenseitig genannt. Die Lagerung der Hubspindel 19 erfolgt antriebsseitig durch ein Lager 39 und konsolenseitig durch ein Lager 40. Die Führung des Schlittens 15 geschieht vorteilhaft durch sog. Kugelbuchsen 41. Oberhalb des Spindelträgers 8 ist die Meßeinrichtung M angeordnet. Diese umfaßt im wesentlichen eine Meßsonde 42, die innerhalb eines Schutzrohres 43 längs verschiebbar montiert ist und zusammen mit dem Schutzrohr 43 anhand eines Pneumatikzylinders 44 parallel zur Achse 5 bewegt werden kann. Um die Meßsonde 42 aus dem Schutzrohr 43 auszufahren, ist ein weiterer Pneumatikzylinder 45 vorgesehen. Mittels der Meßeinrichtung M können die zur Bearbeitung eines Bauteils abgespeicherten Koordinaten überprüft bzw. korrigiert werden. Hierzu wird die Bohrmaschine 1 mittels des Positionierers 4 bis auf einen vorbestimmten Abstand zu einem Bezugspunkt des betreffenden Bauteils herangefahren. Danach wird die Meßsonde 42 zusammen mit dem Schutzrohr 43 durch Verfahren um eine weitere vorbestimmte Strecke mittels des Pneumatikzylinders 44 in die gezeigte Bereitschaftsposition gebracht. Dann wird der eigentliche Meßvorgang durchgeführt. Dabei wird die Meßsonde 42 aus dem Schutzrohr 43 ausgefahren, bis sie das Bauteil berührt. Da alle während des Meßvorganges durchfahrenen Strecken durch Wegmessungen bekannt sind, ergibt sich aus dieser Messung die tatsächliche Lage des bauteilfesten Bezugspunktes. Damit können Ungenauigkeiten, verursacht durch die Motorik des Roboters R bzw. durch das Aufspannen des Bauteils korrigiert werden. Dies geschieht dadurch, daß dem zuvor erfaßten Punkt des Bauteils die exakten Bauteilkoordinaten zugeordnet werden. Die Spindelachse 2 wird von der Achse 5, um die die Bohreinheit 6 drehbar ist, etwa in deren Mitte senkrecht geschnitten, wenn sich die Bohrspindel in ihrer Ruhelage befindet. Die Bohreinheit 6 umfaßt außer den vorgenannten Einheiten zwei in Fig. 2 nicht gezeigte Videokameras 10 und 11.

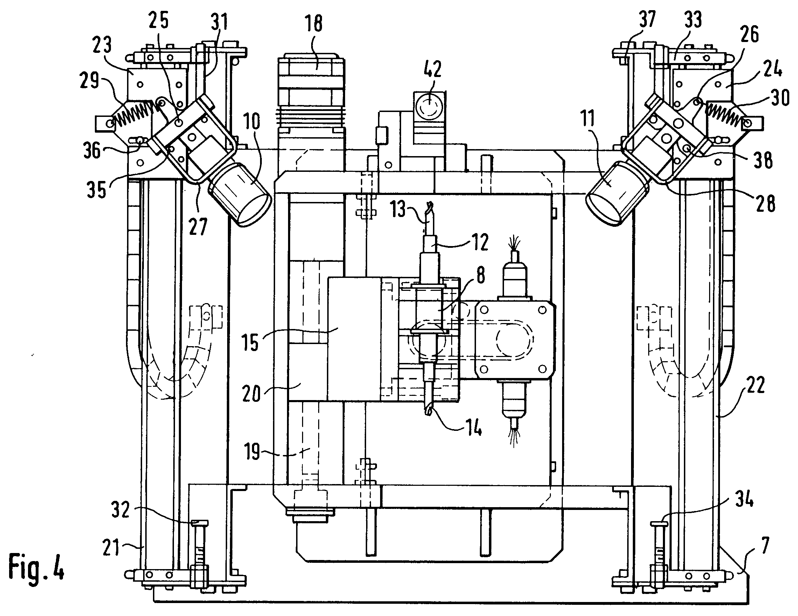

Figur 4 zeigt die Bohreinheit 6 in Blickrichtung der Achse 5 mit dem Spindelträger 8, der Bohrspindel 12, den beiden Bohrern 13 und 14, dem Vorschubmotor 18 mit der Hubspindel 19 und der Spindelmutter 20 mit dem Schlitten 15. Zu beiden Seiten der Bohrmaschine 1 befindet sich je ein mit der Haltekonsole 3 fest verbundener kolbenstangenloser Pneumatikzylinder 21 und 22, womit jeweils ein Kameraträger 23 bzw. 24 in vertikaler Richtung verfahrbar ist. Auf jedem Kameraträger 23,24 befindet sich ein Lagerbolzen 25,26, auf dem wiederum jeweils ein Kamerahalter 27 für die Videokamera 10 bzw. 28 für die Videokamera 11 schwenkbar gelagert ist. Durch eine Zugfeder 29 bzw. 30 wird jeder Kamerahalter 27,28 horizontal ausgerichtet, wenn auf diesen keine weitere Kraft einwirkt. Im Endbereich des jeweiligen Weges der Kameraträger 24,24 befindet sich jeweils ein einstellbarer Anschlag 31,32 bzw. 33,34. Je Kamerahalter 27,28 sind zwei Schwenkstifte 35,36 bzw 37,38 vorgesehen, die mit den Anschlägen 31 bis 34 zusammenwirken. Dargestellt ist die obere Position der Kameras 10,11, in der diese auf den Bohrer 14 ausgerichtet sind. In der gezeigten Position des Bohrers 14 können Bohrungen in Nornallage hergestellt werden. Um nun beispielsweise mit dem Bohrer 13 Bohrungen über Kopf herzustellen, werden die Kameraträger 23,24 mittels der Pneumatikzylinder 21,22 im Bild nach unten gefahren. Dabei entfernen sich die Schwenkstifte 36,37 von den Anschlägen 31 und 33, wodurch sich die Videokameras 10,11 infolge der Federn 29,30 horizontal ausrichten. Gegen Ende der Bewegung kommen die Schwenkstifte 35 und 38 mit den Anschlägen 32 und 34 in Berührung, was im weiteren Verlauf der Bewegung dazu führt, daß die Videokameras 10,11 nach oben geschwenkt werden und am Ende der Verschiebung genau auf den Bohrer 13 ausgerichtet sind. Die Bohrmaschine ist damit bereit, Bohrungen über Kopf herzustellen.

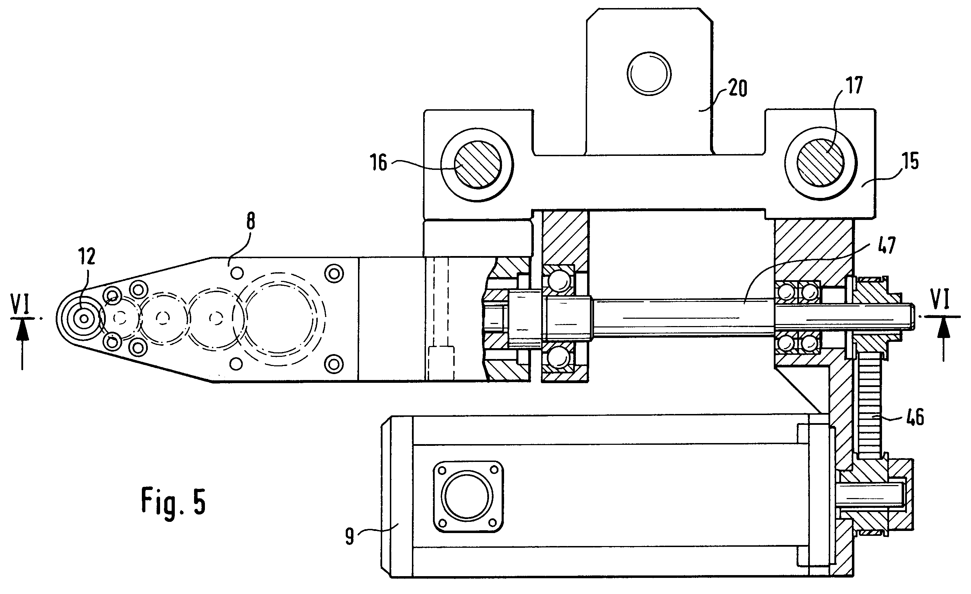

Figur 5 zeigt den Spindelträger 8 mit dem Bohrmotor 9 und der Spindelmutter 20 mit dem Schlitten 15 und den Säulen 16 und 17. Der Bohrmotor 9 treibt über einen Zahnriemen 46 eine Welle 47, die schließlich mit der Bohrspindel 12 in Wirkverbindung steht.

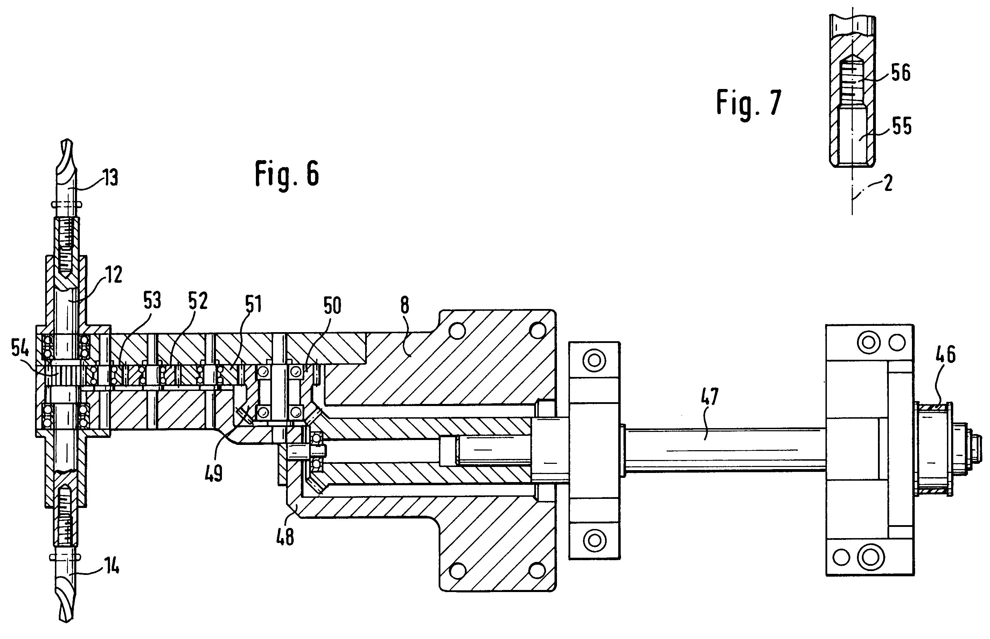

Fig 6 zeigt den Spindelträger 8 im Schnitt mit dem Zahnriemen 46, der Welle 47, der Bohrspindel 12 und den Bohrern 13 und 14. Die Welle 47 treibt zwei Kegelräder 48 und 49. Letzteres ist mit einem Zahnrad 50 fest verbunden, das über weitere Zahnräder 51 bis 53 auf das fest mit der Bohrspindel 12 verbundene Ritzel 54 einwirkt.

Gemäß Fig. 7 sind die Aufnahmen für die Bohrer 13 und 14 direkt in die Bohrspindel 12 eingearbeitet und bestehen jeweils aus einer mit der Spindelachse 2 fluchtenden Aufnahmebohrung 55, deren Durchmesser- und Rundlauffehler innerhalb definierter enger Grenzen liegt, und einem Innengewinde 56, dessen Außendurchmesser kleiner ist als der Durchmesser der Aufnahmebohrung 55. Bei den gezeigten Bohrern 13,14 handelt es sich im engeren Sinne um sog. Senkbohrer, womit eine Bohrung mit einer Senkung in einem Arbeitsgang gebohrt werden kann. Die hochgenaue Einpassung der Bohrer 13,14 in die Bohrspindel 12 eröffnet die Möglichkeit, sog. Paßbohrungen in einem Arbeitsgang herzustellen, wofür bisher mindestens zwei Arbeitsgänge (Vorbohren und Aufreiben) erforderlich waren. Zur Realisierung dieser Paßbohrungen in fachüblichen Aluminiumlegierungen werden die Bohrer der erfindungsgemäßen Bohrmaschine 1 mit ca. 6000 U/min betrieben, wobei besondere Maßnahmen zu deren Kühlung und Schmierung erforderlich sind.

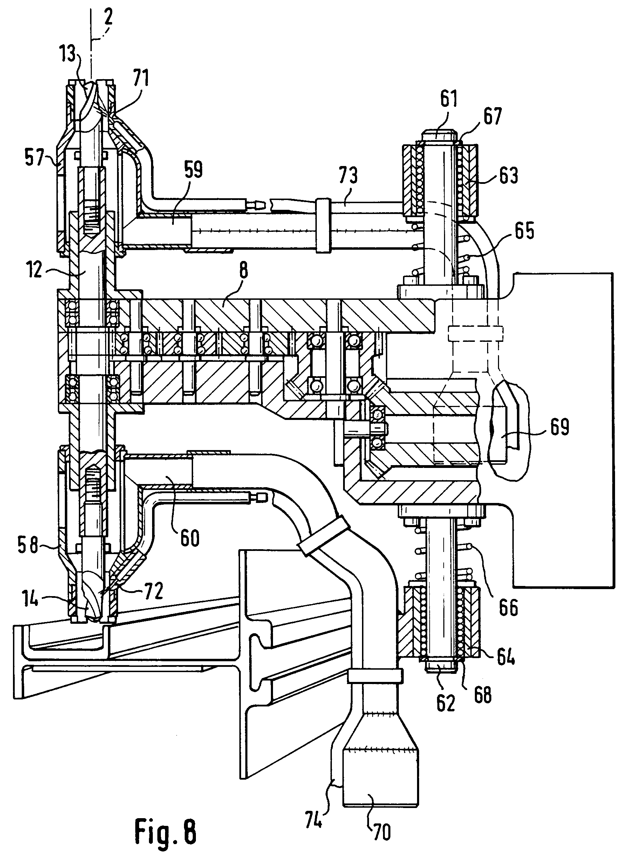

Fig. 8 zeigt eine Seitenansicht des Spindelträgers 8 mit der Bohrspindel 12 und den Bohrern 13 und 14. Je Bohrer ist eine Absaughaube 57,58 angeordnet, woran ein Absaugrohr 59,60 angeschlossen ist. Am Spindelträger 8 sind zwei parallel zur Bohrspindel 12 ausgerichtete Führungsstäbe 61 und 62 angeordnet. Mit jedem Absaugrohr 59,60 ist eine auf dem jeweiligen Führungsstab 61,62 gleitende Führungsbuchse 63,64 fest verbunden, so daß jede Absaughaube 57,58 gegenüber dem Spindelträger 8 in Richtung der Spindelachse 2 verschiebbar ist. Am spindelträgerseitigen Ende ist jeweils eine Druckfeder 65,66 vorgesehen, die auf die betreffende Führungsbuchse einwirkt, so daß diese an einem jeweils durch einen Sprengring 67,68 gebildeten Anschlag anliegt. Hierdurch nehmen die Absaughauben 57,58 die gezeigte Position ein. An jedem Absaugrohr 59,60 befindet sich ein Schlauchanschluß 69,70 über den die beim Bohren entstehenden Späne abgesaugt werden. Es hat sich als vorteilhaft erwiesen, wenn das Absaugen im Dauerbetrieb erfolgt. Die Kühlung und Schmierung der Bohrer 13,14 wird jeweils durch eine auf den jeweiligen Bohrer 13,14 ausgerichtete Sprühdüse 71,72 erreicht, die im Mündungsbereich der betreffenden Absaughaube 57,58 angeordnet ist. Den Sprühdüsen 71,72 wird über entsprechende Zuleitungen 73,74 und nicht gezeigte ansteuerbare Ventile ein unter Druck stehendes Schmiermittel/Luft- Gemisch zugeführt.

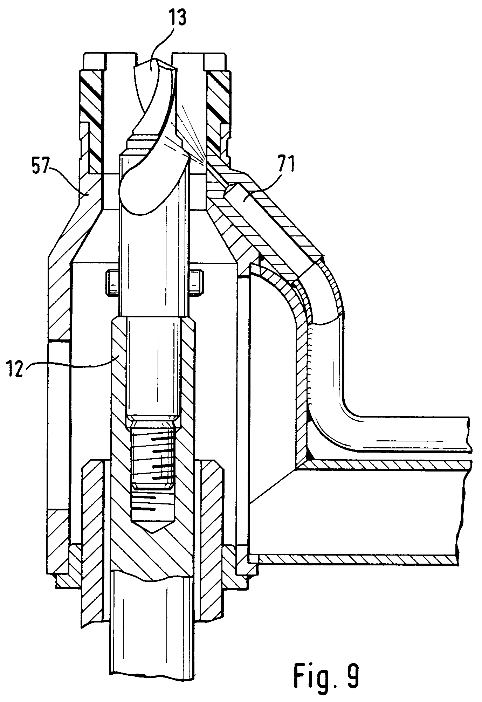

Fig. 9 zeigt die Absaughaube 57 mit dem Bohrer 13 und der Sprühdüse 71. Das Schmieren und Kühlen erfolgt durch kurze Sprühimpulse, die jeweils nach Herstellung einer Bohrung von der Düse 71 abgegeben werden. Durch die Absaugung im Dauerbetrieb wird erreicht, daß überschüssiges Schmiermittel nicht auf das Bauteil gelangt, sondern über die Absaugrohre 59,60 abgeführt wird. Außerdem ergibt sich durch die dauernd eingeschaltete Absaugung eine zusätzliche Kühlwirkung.

## Patentansprüche

1. Bohrmaschine (1) zum automatischen Herstellen von Nietbohrungen, wobei die Bohrmaschine gegenüber einer Haltekonsole (3) zur Nietstelle hin verfahrbar ist und die Haltekonsole Spannelemente zum Andocken der Bohrmaschine an einen Fertigungsroboter (R) sowie Kupplungen zur Energie- und Signalübertragung aufweist, wobei
die Bohrmaschine (1) einen in einer parallel zur Achse (2) der Bohrspindel (12) ausgerichteten auf der Haltekonsole angeordneten Führung (Stäbe 16,17) in einer Richtung z motorisch verfahrbar gelagerten Schlitten (15) für einen Spindelträger (8) mit einem Bohrkopf (8a) aufweist, in dem eine Bohrspindel drehbar gelagert ist, dadurch **gekennzeichnet**, daß annähernd in der Mitte der Längserstreckung der Bohrspindel (12) ein Antriebsrad (54) und an jedem ihrer Enden eine Aufnahmebohrung (55) für die Bohrer (13,14) angeordnet ist und die Haltekonsole (3) um eine Achse (5) drehbar ist, die die Achse (2) der Bohrspindel (12) etwa in ihrer Mitte senkrecht schneidet.

2. Bohrmaschine nach Anspruch 1,
dadurch **gekennzeichnet**, daß die Aufnahmebohrungen (55) direkt in die Bohrspindel (12) eingearbeitet sind.

3. Bohrmaschine nach Anspruch 1 oder 2,
dadurch **gekennzeichnet**, daß der Antrieb der Bohrspindel (12) durch einen ersten Elektromotor (9) über einen Zahnriemen (46) erfolgt.

4. Bohrmaschine nach Anspruch 3,
dadurch **gekennzeichnet**, daß der erste Elektromotor (9) regelbar ausgebildet ist.

5. Bohrmaschine nach einem der Ansprüche 1 bis 4,
dadurch **gekennzeichnet**, daß zum Vorschub des Bohrers (13,14) ein zweiten Elektromotor (18) vorgesehen ist.

6. Bohrmaschine nach Anspruch 5,
dadurch **gekennzeichnet**, daß der zweite Elektromotor (18) als Schrittmotor ausgebildet ist.

7. Bohrmaschine nach einem der Ansprüche 5 oder 6,
dadurch **gekennzeichnet**, daß der zweite Elektromotor (18) über eine Hubspindel und eine Spindelmutter mit dem Spindelträger (8) in Wirkverbindung steht.

8. Bohrmaschine nach einem der Ansprüche 1 bis 7,
**gekennzeichnet**, durch eine Meßeinrichtung (M) mit einer innerhalb eines Schutzrohres ausfahrbar angeordneten Meßsonde (42).

9. Bohrmaschine nach einem der Ansprüche 1 bis 8,
dadurch **gekennzeichnet**, daß an der
Haltekonsole (3) mindestens eine in Richtung der Bohrspindel (12) verfahrbare Videokamera (10,11) angeordnet ist.

10. Bohrmaschine nach Anspruch 9,
dadurch **gekennzeichnet**, daß die
Videokamera (10,11) mittels eines Pneumatikzylinders (21,22) verfahrbar ausgebildet ist.

11. Bohrmaschine nach einem der Ansprüche 9 oder 10,
dadurch **gekennzeichnet**, daß zum Verfahren der Videokamera (10,11) ein kolbenstangenloser Pneumatikzylinder (21,22) vorgesehen ist.

12. Bohrmaschine nach einem der Ansprüche 1 bis 11,
dadurch **gekennzeichnet**, daß der
Spindelträger (8) für jeden Bohrer (13,14) mit einer Absaughaube (57,58) versehen ist.

13. Bohrmaschine nach einem der Ansprüche 1 bis 12,
dadurch **gekennzeichnet**, daß zum Schmieren und Kühlen der Bohrer (13,14) jeweils eine Sprühdüse (71,72) vorgesehen ist.

## Claims

1. Drilling machine (1) for automatically producing rivet bores, wherein the drilling machine is capable of travel, in relation to a holding bracket (3), as far as the riveting point and the holding bracket has clamping elements for docking the drilling machine with a manufacturing robot (R), and also couplings for power and signal transmission, and wherein the drilling machine (1) has a carriage (15) for a spindle-carrier (8) having a drilling head (8a) in which a drilling spindle is rotatably mounted, which carriage is mounted, for motor-driven travel in a direction z, in a guide (bars 16, 17) which is orientated parallel to the axis (2) of the drilling spindle (12) and is disposed on the holding bracket, characterized in that a drive wheel (54) is disposed approximately in the centre of the longitudinal extent of the drilling spindle (12), a receiving bore (55) for the drills (13, 14) is disposed at each end of the said drilling spindle, and the holding bracket (3) is rotatable about an axis (5) which perpendicularly intersects the axis (2) of the drilling spindle (12) approximately in the centre thereof.

2. Drilling machine according to claim 1,
**characterized** in that the receiving bores (55) are incorporated directly in the drilling spindle (12).

3. Drilling machine according to claim 1 or 2,
**characterized** in that the drilling spindle (12) is driven by a first electric motor (9) via a toothed belt (46).

4. Drilling machine according to claim 3,
**characterized** in that the first electric motor (9) is constructed so as to be adjustable.

5. Drilling machine according to one of claims 1 to 4, **characterized** in that a second electric motor (18) is provided for advancing the drill (13, 14).

6. Drilling machine according to claim 5,
**characterized** in that the second electric motor (18) is constructed as a stepping motor.

7. Drilling machine according to one of claims 5 or 6, **characterized** in that the second electric motor (18) is in operative connection, via a lifting spindle and a spindle nut, with the spindle-carrier (8).

8. Drilling machine according to one of claims 1 to 7, **characterized** by a measuring arrangement (M) having a measuring probe (42) which is disposed so as to be extensible within a protective tube.

9. Drilling machine according to one of claims 1 to 8, **characterized** in that at least one video camera (10, 11), which is capable of travel in the direction of the drilling spindle (12), is disposed on the holding bracket (3).

10. Drilling machine according to claim 9,
**characterized** in that the video camera (10, 11) is constructed so as to be capable of travel by means of a pneumatic cylinder (21, 22).

11. Drilling machine accoridng to one of claims 9 or 10, **characterized** in that a pneumatic cylinder (21, 22) without a piston rod is provided for the travel of the video camera (10, 11).

12. Drilling machine according to one of claims 1 to 11, **characterized** in that the spindle-carrier (8) for each drill (13, 14) is provided with a suction hood (57, 58).

13. Drilling machine according to one of claims 1 to 12, **characterized** in that one nozzle (71, 72) in each case is provided for the lubrication and for the cooling of the drills (13, 14).

## Revendications

1. Foreuse (1) destinée à réaliser automatiquement des alésages de rivetage, la foreuse pouvant être déplacée vers le point de rivure par rapport à une console (3) et ladite console présentant des éléments de serrage destinés à connecter la foreuse à un robot de fabrication (R) ainsi que des couplages destinés à la transmission de l'énergie et des signaux, de même que la foreuse (1) présente un coulisseau (15) pour une poupée (8) pourvue d'une tête de forage (8a) disposé de manière à pouvoir être déplacé par moteur dans une direction z sur une glissière (barres 16 et 17) disposée sur la console et dirigée parallèlement à l'axe (2) de la broche de perçage (12), une tête de forage dans laquelle est disposée une broche de forage (12) de manière à pouvoir tourner, **caractérisée en ce que** à proximité du milieu de l'extension longitudinale de la broche de perçage (12) est placé un pignon d'entraînement (54) et à chaque extrémité de laquelle se trouve un alésage de réception (55) pour les forets (13, 14), la console (3) pouvant pivoter autour d'un axe (5) qui coupe perpendiculairement et environ en son milieu l'axe (2) de la broche de perçage (12).

2. Foreuse selon la revendication 1, caractérisée en ce que les alésages de réception (55) sont directement aménagés dans la broche de perçage (12).

3. Foreuse selon l'une ou l'autre des revendications 1 à 2, caractérisée en ce que l'entraînement de la l'roche de perçage (12) s'effectue grâce à un moteur électrique (9) par l'intermédiaire d'une courroie crantée (46).

4. Foreuse selon la revendication 3, caractérisée en ce que le premier moteur électrique (9) est conçu de manière à pouvoir être réglé.

5. Foreuse selon l'une ou l'autre des revendications 1 à 4, caractérisée en ce que un deuxième moteur électrique (18) est prévu pour l'avance du foret (13, 14).

6. Foreuse selon la revendication 5, caractérisée en ce que le deuxième moteur électrique (18) est conçu comme un moteur pas à pas.

7. Foreuse selon l'une ou l'autre des revendications 5 à 6, caractérisée en ce que le deuxième moteur électrique (18) se trouve en connexion active avec la poupée (8) par l'intermédiaire d'une vis de montée et descente et d'un écrou.

8. Foreuse selon l'une ou l'autre des revendications 1 à 7, caractérisée par un dispositif de mesure (M) pourvu d'une tête de mesure (42) disposée de façon à pouvoir être déplacée à l'intérieur d'une gaine de protection.

9. Foreuse selon l'une ou l'autre des revendications 1 à 8, caractérisée en ce que sur la console d'arrêt (3) est disposée au moins une caméra-vidéo (10, 11) pouvant être déplacée dans la direction de la l'roche de perçage (12).

10. Foreuse selon la revendication 9, caractérisée en ce que la caméra-vidéo (10, 11) est conçue de manière à pouvoir être déplacée au moyen d'un vérin pneumatique (21, 22).

11. Foreuse selon l'une ou l'autre des revendications 9 à 10, caractérisée en ce que afin de déplacer la caméra-vidéo (10, 11) est prévu un vérin pneumatique (21, 22) dépourvu d'une tige de piston.

12. Foreuse selon l'une ou l'autre des revendications 1 à 11, caractérisée en ce que la poupée (8) est pourvue pour chaque foret (13, 14) d'un capot d'aspiration (57, 58).

13. Foreuse selon l'une ou l'autre des revendications 1 à 12, caractérisée en ce que est prévu un gicleur d'arrosage (71, 72) destiné à lubrifier et à refroidir les forets (13, 14).
